# EUROPEAN PATENT APPLICATION

(11) **EP 4 714 562 A1**
(43) Date of publication of application: **25.03.2026**
(21) Application number: 24913418.0
(22) Date of filing: 26.12.2024
(51) Int. Cl.: B05C 5/02, H01M 50/264, B05C 9/10

(54) **RESIN COMPOSITION APPLICATOR AND BATTERY ASSEMBLY**

(30) Priority: 26.12.2023 KR 20230191414; 25.01.2024 KR 20240011670; 27.03.2024 KR 20240042103; 10.07.2024 KR 20240091040
(71) Applicant: LG Energy Solution, Ltd., Seoul 07335 (KR)
(72) Inventor: LEE, Seonghwan, Daejeon 34122 (KR); LEE, Yunseong, Daejeon 34122 (KR); KANG, Youngwoo, Daejeon 34122 (KR)
(74) Representative: Plasseraud IP
(86) International application number: PCT/KR2024/021173
(87) International publication number: WO 2025/143811

(57) **Abstract**

A resin composition applicator for applying a resin composition to at least one surface of a housing or to at least a part of at least one surface of the battery is provided. The resin composition applicator includes a cartridge unit, a mixer unit connected to the cartridge unit, and an application unit connected to the mixer unit. The application unit includes at least one application pipe provided such that the resin composition introduced from the mixer unit can pass therethrough, and a discharge unit having a storage space provided such that the resin composition introduced from the at least one application pipe is accumulated therein. The discharge unit may at least include a first surface and a second surface for forming the storage space, and be configured such that the resin composition is discharged through a space between one end of the first surface spaced apart from one end of the second surface.

## Description

### CROSS-REFERENCE TO RELATED APPLICATIONS

This application was filed with the Korean Intellectual Property Office on December 26, 2023, January 25, 2024, March 27, 2024, July 10, 2024, and December 26, 2024, respectively, and this application claims the benefit of Korean Patent Application No. 10-2023-0191414, Korean Patent Application No. 10-2024-0011670, Korean Patent Application No. 10-2024-0042103, Korean Patent Application No. 10-2024-0091040 and Korean Patent Application No. 10-2024-0196852, in the Korean Intellectual Property Office, the disclosures of which are incorporated herein in their entireties by reference.

### TECHNICAL FIELD

The present disclosure relates to an applicator of resin composition that applies resin composition by which heat dissipation performance is improved by applying to the battery field, and a battery assembly.

### BACKGROUND

Recently, the demand for mobile devices such as smartphones, tablet PCs, and wireless earphones is increasing. Further, as the development of electric vehicles, energy storage batteries, robots and satellites begins in earnest, research on high-performance secondary batteries that can be repeatedly charged and discharged as an energy source is actively underway.

Currently commercially available secondary batteries include nickel-cadmium batteries, nickel-metal hydride batteries, nickel-zinc batteries, and lithium secondary batteries. Among these, the lithium secondary batteries have almost no memory effect compared to nickel-based secondary batteries, and thus the lithium secondary batteries have the advantages of free charging and discharging, very low self-discharge rate, and high energy density.

Meanwhile, in order to secure high capacity and high output in lithium secondary batteries, battery cells that become the functional units of the battery can be stacked, and they may be electrically connected to each other by combining them in series and parallel connections.

The stacked battery cells can be housed and fixed within the housing. In order to secure the batteries stacked in the housing, the resin composition may be applied inside of the housing.

Specifically, the resin composition may be applied inside the housing by an applicator, and the stacked battery cells may be placed thereon. Here, there is a need to shorten the time required to apply the resin composition using the applicator.

### SUMMARY

### Technical Goals

The present application may provide an applicator of resin composition by which time required to apply the resin composition is shortened, and the process tact time is reduced.

The present application may provide an applicator of resin composition that is protected from impact when the resin composition is applied, and shaking is minimized when the resin composition is applied.

The present application may provide a method of manufacturing a battery assembly (or a battery module and a battery pack) using an improved applicator of resin composition and provide the battery (or, a battery module and a battery pack) manufactured thereby.

### Technical solutions

According to an aspect, an applicator of resin composition applies a resin composition that is to be applied to at least a portion of at least one surface of a housing accommodating a battery or at least one surface of the battery.

According to an aspect, the applicator of resin composition includes a cartridge part, a mixer part connected to the cartridge part and an application part connected to the mixer part, and the application part includes at least one application tube provided in order for the resin composition flowing from the mixer part to pass through, a discharging part including a storage space provided in order for the resin composition flowing from the at least one application tube to be accumulated, and the discharging part includes at least a first surface and a second surface forming the storage space, and is configured to discharge the resin composition outside through a space between an end of the first surface and an end of the second surface.

According to an aspect, in the applicator of resin composition, each of the first surface and the second surface may independently have an inclination angle of more than 0 degree and less than or equal to 90 degrees with respect to a surface on which the resin composition is to be applied.

According to an aspect, in the applicator of resin composition, when any one surface between the first surface and the second surface has an inclination angle of 90 degrees with respect to the surface on which the resin composition is to be applied, another surface may have an inclination angle greater than 0 degree and less than 90 degrees.

According to an aspect, in the applicator of resin composition, the cartridge part may include a first cartridge part configured to accommodate a subject composition and a second cartridge part configured to accommodate a hardener composition, the first cartridge part may be connected to the mixer part via a first connection tube in order to be in fluid connection, and the second cartridge part may be connected to the mixer part via a second connection tube in order to be in fluid connection.

According to an aspect, in the applicator of resin composition, the first connection tube and the second connection tube may not be connected to each other.

According to an aspect, in the applicator of resin composition, the mixer part may include a gathering part fluidly connected to the first connection tube and the second connection tube and a mixing part fluidly connected to the gathering part and including a screw apparatus.

According to an aspect, in the applicator of resin composition, the at least one application tube may include an inlet part and a flowing part, and the inlet part may be disposed in order to at least partially overlap the mixer part, configured to connect the mixer part and the flowing part in order for the resin composition to flow, and have a shape in which a cross sectional area through which the resin composition passes gradually decreases from an end of the mixer part to an end of the flowing part.

According to an aspect, in the applicator of resin composition, the flowing part may include a cross sectional area of each point that remains constant and through which the resin composition passes based on a direction in which the resin composition flows.

According to an aspect, in the applicator of resin composition, the flowing part may include a bent part that is provided in at least an area and configured to change a direction in which the resin composition moves.

According to an aspect, in the applicator of resin composition, the bent part may be bent 5 times or less.

According to an aspect, in the applicator of resin composition, the flowing part further may include a storage part provided in at least an area and configured to decrease a moving speed of the resin composition, and the storage part may include a cross sectional area of each point through which the resin composition passes based on the direction in which the resin composition flows that is greater than a cross sectional area of each point through the resin composition passes in an area other than the storage part.

According to an aspect, in the applicator of resin composition, the first surface and the second surface may have an inclination angle difference that is 10 degrees or less.

According to an aspect, in the applicator of resin composition, the first surface and the second surface may be configured to be gradually narrower toward a discharge end of the resin composition to form a nozzle structure.

According to an aspect, in the applicator of resin composition, the discharging part may include a discharge hole configured in order for the resin composition to be discharged outside, and the discharge hole may have a rectangular shape to perform a surface-application with the resin composition.

According to an aspect, in the applicator of resin composition, the discharge hole may be formed in order for a width in a second direction that is a direction in which the applicator of the resin composition moves to be smaller than a width in a first direction perpendicular to the second direction.

According to an aspect, in the applicator of resin composition, the resin composition may be a viscous composition having a viscosity of 10,000 cP or greater measured at 25°C.

According to an aspect, in the applicator of resin composition, the application part may include a case configured to cover the application tube and at least a portion of the discharging part, and the case may include an external part and a buffer part provided inside the external part.

According to an aspect, in the applicator of resin composition, the first surface may have an inclination angle that is smaller than or equal to an inclination angle of the second surface.

According to an aspect, an applicator of resin composition includes a cartridge part, a mixer part connected to the cartridge part and an application part connected to the mixer part, the application part includes at least one application tube provided in order for the resin composition flowing from the mixer part to pass through, a discharging part including a storage space provided in order for the resin composition flowing from the at least one application tube to be accumulated and a case configure to cover the application tube and at least a portion of the discharging part, and the case includes an inclined part, and the inclined part has a predetermined inclination angle with respect to a surface that is an application target.

According to an aspect, in the applicator of resin composition, the discharging part may include a first surface and a second surface facing each other to form the storage space, each having a predetermined inclination angle with respect to the surface on which the resin composition is to be applied, the first surface may have an inclination angle that is smaller than or equal to an inclination angle of the second surface, and the predetermined inclination angle that the inclined part has may be smaller than the inclination angle of the second surface.

According to an aspect, in the applicator of resin composition, the case may include a plurality of inclined parts.

According to an aspect, a battery assembly may be a battery module or a battery pack. The battery assembly includes a housing with a settlement surface, a stacked battery disposed on the settlement surface and a resin composition interposed between the settlement surface and the stacked battery and for joining the housing and the stacked battery, a ratio of difference between a maximum thickness of the resin composition relative to an average thickness of the cured resin composition between the housing and the stacked battery and the average thickness is within 5%, and a ratio of difference between a minimum thickness for the average thickness of the resin composition and the average thickness is within 5%.

### Advantageous Effects

According to the aspects, it is possible to shorten the time required to apply a resin composition, and to reduce the process tact time. According to the aspects, it is possible to protect an apparatus from impact when a resin composition is applied and to minimize the shaking when the resin composition is applied.

According to the aspects, it is possible provide a method of manufacturing a battery assembly (or, a battery module and a battery pack) using an applicator of resin composition and a battery assembly (or, a battery module and a battery pack) manufactured therefrom.

### BRIEF DESCRIPTION OF THE DRAWINGS

The drawings illustrated in the present disclosure are according to mere aspects, and the ratio of the width, the length, the thickness (or the height) of each element is for detailed description for the aspects, and thus the ratio may differ from reality. Further, in the coordinate system illustrated in the drawings, each axis may be perpendicular to each other, and the direction the arrow points may be the + direction, and the direction opposite to the direction indicated by the arrow (rotated by 180 degrees) may be the - direction.
FIG. 1 is a perspective view illustrating at least a portion of an applicator of resin composition according to an aspect.
FIG. 2 is a plan view illustrating at least a portion of a mixer part of an applicator of resin composition according to an aspect.
FIG. 3 is a plan view illustrating at least a portion of the application part of an applicator of resin composition according to an aspect.
FIG. 4 is a perspective view illustrating at least a portion of an applicator of resin composition according to an aspect.
FIG. 5 is a plan view illustrating at least a portion of the application part of an applicator of resin composition according to an aspect.
FIG. 6 is a perspective view illustrating at least a portion of an applicator of resin composition according to an aspect.
FIG. 7 is a plan view illustrating at least a portion of the application part in FIG. 6.
FIG. 8 is a plan view illustrating at least a portion of the application part of an applicator of resin composition according to an aspect.
FIG. 9 is a plan view illustrating at least a portion of a discharge hole of an applicator of resin composition according to an aspect.
FIG. 10 is a plan view illustrating at least a portion of the application part of an applicator of resin composition according to an aspect.
FIG. 11 is a perspective view illustrating at least a portion of an applicator of resin composition according to an aspect.
FIG. 12 is a perspective view illustrating the process of applying resin composition using an applicator of resin composition according to aspect.
FIG. 13 and FIG. 14 are perspective views illustrating the process of applying a resin composition to a housing using an applicator of resin composition according to an aspect.
FIG. 15 is a schematic exploded perspective view briefly illustrating a battery pack according to an aspect.
FIG. 16 is a schematic enlarged view illustrating a portion of the battery pack (for example, a part R).
FIG. 17 is a top view of FIG. 16.
FIG. 18 is a cross-sectional view along line P-P' of FIG. 18.
FIG. 19 is an exploded perspective view schematically illustrating a battery module according to an aspect of the present application.
FIG. 20 is a top view of FIG. 19.
FIG. 21 is a cross-sectional view along line Q-Q' of FIG. 20.

### DETAILED DESCRIPTION

Prior to the detailed description of the present disclosure, terms or words used in the specification and claims may not be construed as limited to their common or dictionary meanings. Further, the terms or words should be interpreted with meaning and concept consistent with the technical idea of the present disclosure based on the principle that the inventor may appropriately define the concept of terms in order to explain it in the best way. The aspects described in this specification and the configurations shown in the drawings are only the most preferred embodiments of the present disclosure, and do not necessarily represent the entire technical idea of the present disclosure. Accordingly, at the time of filing the present disclosure, there may be various equivalents and modifications that can replace them.

The same reference numeral or sign shown in each drawing attached to the specification may represent parts or components that perform substantially the same function. For convenience of description and understanding, different embodiments may be described using the same reference numerals or symbols. In other words, even if a component or an element having the same reference numeral is shown in multiple drawings, the multiple drawings may not all represent one aspect.

In the following description, singular expressions include plural expressions unless the context clearly dictates otherwise. It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. The terms "have," "may have," "include," and "may include" as used herein indicate the presence of corresponding features (for example, elements such as numerical values, functions, operations, or parts), and do not preclude the presence of additional features.

Further, in the following description, expressions such as an upper side, top, a lower side, bottom, a side, front and a back side are expressed based on the direction shown in the drawing. If the direction of the object changes, it may be expressed differently.

Further, in the specification and claims, terms including ordinal numbers such as "first," "second," etc. may be used to distinguish between components or elements. These ordinal numbers are used to distinguish identical or similar components from each other, and the meaning of the terms should not be interpreted limitedly due to the use of such ordinal numbers. For example, components or elements combined with these ordinal numbers should not be interpreted as having a limited order of use or arrangement based on the number. If necessary, each ordinal number may be used interchangeably.

In the present disclosure, a battery may be used with the same meaning as a cell. Further, the battery or the cell may be a general term for a battery cell, a battery assembly including a battery cell, a battery module or a battery pack.

In the present disclosure, the application may indicate wetting the surface of a target to which a material is to be applied, and this may be distinguished from injection, which fills the inside of an object having volume.

Hereinafter, aspects of the present disclosure will be described in detail with reference to the attached drawings. However, the spirit of the present disclosure may not be limited to the aspects. For example, a person skilled in the art who understands the spirit of the present disclosure may suggest other aspects that are included within the scope of the spirit of the present disclosure through addition, change, or deletion of components or elements: however, such aspects are intended to be included within the scope of the present disclosure. The shapes and sizes of elements in the drawings may be exaggerated for clearer explanation.

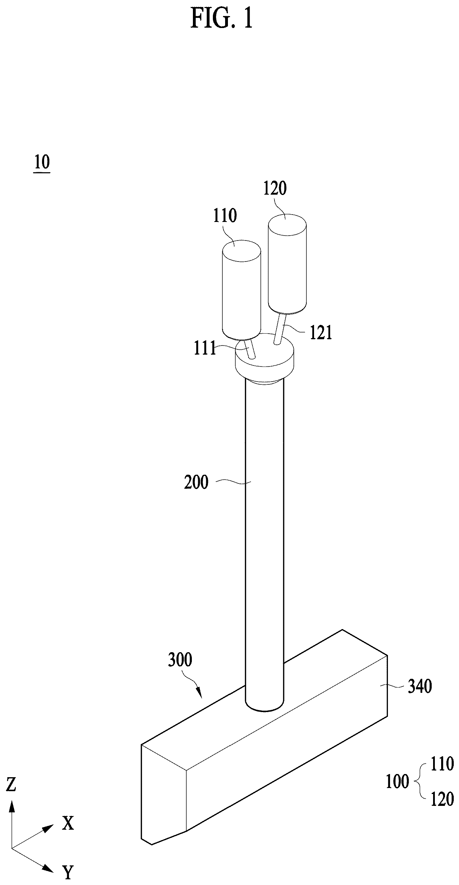

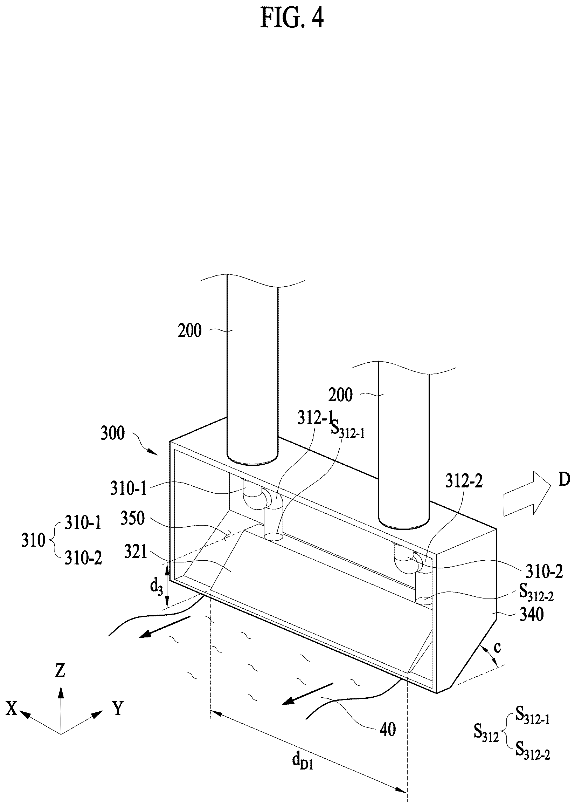

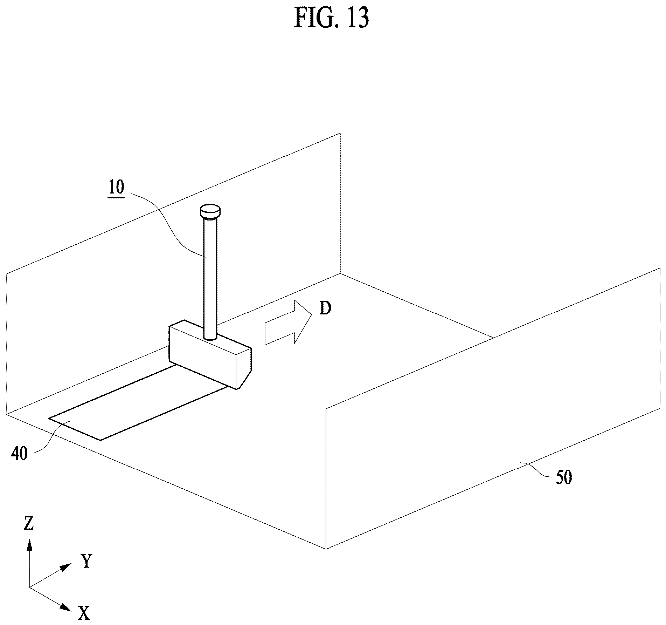

FIG. 1 is a perspective view illustrating at least a portion of an applicator of resin composition 10 according to an aspect. The applicator of resin composition 10 may apply a resin composition (for example, a resin composition 40 of FIG. 4) to at least one surface of a housing (for example, a housing 50 of FIG. 13) that accommodates the battery or to at least a portion of at least one surface of the battery. Here, the battery may be a term that encompasses battery cells, battery assemblies, battery modules, and battery packs. In other words, the battery may include one or more selected from the group consisting of a battery cell, a battery assembly, a battery module and a battery pack. Specifically, the applicator of resin composition 10 may apply a resin composition (for example, the resin composition 40 of FIG. 4) to one surface inside the battery.

The present disclosure may provide the applicator of resin composition 10 by which the time required to apply the resin composition 40 is shortened and the process tact time is reduced. According to the present disclosure, an apparatus is protected from impact when the resin composition 40 is applied and shaking when the resin composition 40 is applied may be minimized.

According to an aspect, the applicator of resin composition 10 may include a cartridge part 100. There may be one or more cartridge parts 100.

The cartridge part 100 may include a first cartridge part 110 that accommodates a subject composition forming, in one example, the resin composition 40, and a second cartridge part 120 that accommodates a hardener composition. The cartridge part 100 is not particularly limited as long as it can accommodate the subject composition or hardener composition, and any known cartridge part may be used. The first cartridge part 110 may be connected to a mixer part 200 via a first connection tube 111 to be in fluid connection with the mixer part 200. The second cartridge part 120 may be connected to the mixer part 200 via a second connection tube 121 to be in fluid connection with the mixer part 200. The term fluid connection, as used herein, means that elements are connected to each other so that fluid may flow.

The first connection tube 111 and the second connection tube 121 may be configured not to communicate with each other in order for the subject composition and the hardener composition not to be mixed inside. Further, each of the first connection tube 111 and the second connection tube 121 may have a passageway inside in order for the subject composition or the hardener composition to pass through.

In the present disclosure, the resin composition 40 may be a curable composition. The resin composition 40 may include at least one selected from the group consisting of silicone resin, acrylic resin, urethane resin, and epoxy resin. The resin composition 40 may include a subject composition and a hardener composition. The resin composition 40 may be cured by chemical reaction of the subject composition and the hardener composition. The resin composition 40 may be cured to form a cured product.

A subject composition may include subject resin. The subject resin may include, for example, one or more selected from the group consisting of silicone resin, acrylic resin, polyol resin, and epoxy resin. Further, the subject composition may further include fillers to improve heat dissipation performance by securing higher thermal conductivity. In order to ensure excellent heat dissipation performance and compatibility, the subject composition may include the filler in an amount of from 80 wt % to 95 wt %, from 82 wt % to 94 wt % or from 84 wt % to 92 wt % relative to the total weight of the composition. Meanwhile, the subject composition may be a viscous composition. In the present disclosure, the viscous composition may indicate a composition of which viscosity measured at 2.4/s point is 10,000 cP or greater when measured at a shear rate range of 0.01/s to 10.0/s using a Brookfield HB type viscometer at 25°C. Further, in the present disclosure, the viscosity may refer to the viscosity measured at the 2.4/s point when measured at a shear rate range of 0.01/s to 10.0/s using a Brookfield HB type viscometer at 25°C, as described above. Specifically, the subject composition may have a viscosity within the range of 20,000 cP to 1,000,000 cP, 30,000 cP to 900,000 cP, 40,000 cP to 800,000 cP, 50,000 cP to 700,000 cP, 60,000 cP to 600,000 cP, 70,000 cP to 500,000 cP, 80,000 cP to 400,000 cP, 90,000 cP to 300,000 cP or 100,000 cP to 200,000 cP.

The hardener composition may include a hardener. The hardener may be determined depending on the subject resin, and for example, when the subject resin is silicone resin, the hardener may be a siloxane compound, when the subject resin is polyol resin or acrylic resin, the hardener may be an isocyanate compound, and when the subject resin is epoxy resin, the hardener may be an amine compound. Further, the hardener composition may further include the filler to improve heat dissipation performance by securing higher thermal conductivity. The hardener composition may include filler in an amount of from 75 wt % to 92 wt %, from 78 wt % to 90 wt % or from 80 wt % to 89 wt % relative to the total weight of the composition, to ensure excellent heat dissipation performance and compatibility. Meanwhile, the hardener composition may be a viscous composition. Specifically, the hardener composition may have a viscosity within the range of 20,000 cP to 1,000,000 cP, 30,000 cP to 900,000 cP, 40,000 cP to 800,000 cP, 50,000 cP to 700,000 cP, 60,000 cP to 600,000 cP, 70,000 cP to 500,000 cP, 80,000 cP to 400,000 cP, 90,000 cP to 300,000 cP, or 100,000 cP to 200,000 cP.

The resin composition 40 may further contain filler to improve heat dissipation performance by securing higher thermal conductivity by being cured. To ensure excellent heat dissipation performance, the resin composition 40 may contain filler in an amount ranging from 80 wt% to 95 wt%, 82 wt% to 92 wt% or 84 wt% or more to 91 wt% based on the total weight. As described above, the resin composition 40 includes a subject composition including a filler and a hardener composition to be curable and also to secure excellent heat dissipation performance.

The filler may be a thermal conductivity inorganic filler. For example, the thermal conductivity inorganic filler may include ceramic particles such as alumina, aluminum nitride, boron nitride, silicon carbide, silicon nitride, beryllium oxide, zinc oxide, aluminum hydroxide, and boehmite. Further, the resin composition 40 may contain graphite, etc. to ensure higher insulation properties by being cured, and may further contain fumed silica, clay or calcium carbonate.

The resin composition 40 may further contain additives to ensure processability as required. For example, the additives may include a thixotropic agent, a diluent, a dispersant, a surface treatment agent, a plasticizer, or a coupling agent, and may include additional flame retardants in some cases where flame retardancy is required.

The resin composition 40 may have a specific gravity of 2.8 or less, 2.7 or less, 2.6 or less, 2.5 or less, or 2.4 or less as measured in accordance with ASTM D 4052. With regard to the resin composition 40, the time required for the viscosity to double (2x viscosity time) when left at room temperature and pressure may be 40 minutes or greater, 45 minutes or greater, 50 minutes or greater, 55 minutes or greater, or 60 minutes or greater. The time it takes for the viscosity to double from the point of abandonment (2x viscosity time) may be measured using a viscosity measuring device, for example. The resin composition 40 with a specific gravity in the above-mentioned range is more suitable for surface application, and by which managing the applicator of resin composition 10 may be easier.

In an aspect, the cartridge part 100 may contain a mixture of the subject composition and the hardener composition, or may contain the resin composition 40 that is itself a hardening composition. In other words, the cartridge part 100 may be provided as a single unit without distinction between the first cartridge part 110 and the second cartridge part 120. Further, the cartridge part 100 may be connected to the mixer part 200 by a connection tube (not illustrated) to be in fluid connection. Hereinafter, with regard to the characteristics of the connection tube, reference may be made to the description of the first connection tube 111 or the second connection tube 121.

The cartridge part 100 may further include a pressurizing device (not illustrated). The pressurizing means may be configured in order for the subject composition or the hardener composition included in the cartridge part 100 to be smoothly transferred to the mixer part 200 through the first connection tube 111 or the second connection tube 121. Further, the pressurizing means may be configured in order for the resin composition 40 included in the cartridge part 100 to be transferred to the mixer part 200 through the connection tube. Meanwhile, the cartridge part 100 may be configured in order for the subject composition or the hardener composition to be transported to the mixer part 200 by gravity without a pressurizing apparatus.

At least one of the first connection tube 111 and the second connection tube 121 may further include at least one opening and closing apparatus (not illustrated). The opening and closing apparatus is not particularly limited as long as it can control the movement of the subject composition or hardener composition passing through the first connection tube 111 or the second connection tube 121. For example, the opening and closing apparatus may be a valve. The position of the opening and closing apparatus is not particularly limited as long as the movement of the subject composition or hardener composition can be appropriately controlled. For example, each of the first connection tube 111 and the second connection tube 121 may further include an opening and closing apparatus, and the opening and closing apparatus may be provided at a location where the first connection tube 111 and the mixer part 200 come into contact and at a location where the second connection tube 121 and the mixer part 200 come into contact for more efficient movement control. In another example, an opening and closing apparatus may also be provided between the first connection tube 111 and the first cartridge part 110 and between the second connection tube 121 and the second cartridge part 120.

The applicator of resin composition 10 according to an aspect may include the mixer part 200. As described above, the cartridge part 100 and the mixer part 200 may be connected. There may be one or more mixer parts 200, and the number of mixer parts 200 may be determined based on the number of cartridge parts 100. For example, when there are two cartridge parts 100, two mixer parts 200 may be prepared, and each cartridge part 100 may have one mixer part 200 fluidly connected to it.

The mixer part 200 may mix the subject composition and the hardener composition. A passage may be provided inside the mixer part in order for the subject composition and the hardener composition to pass through, and the subject composition and the hardener composition may be mixed while passing through the passage of the mixer part 200. The subject composition and the hardener composition may be formed into the resin composition 40 by passing through the mixer part 200.

Meanwhile, the subject composition and the hardener composition may be viscous compositions, and the resin composition 40 also may be a viscosity composition of 40 degrees. Further, unless otherwise specified, the resin composition 40 may be in an uncured state. Meanwhile, the resin composition 40 may have a viscosity within the range of 20,000 cP to 1,000,000 cP, 30,000 cP to 950,000 cP, 40,000 cP to 900,000 cP, 50,000 cP to 850,000 cP, 60,000 cP to 800,000 cP, 70,000 cP to 750,000 cP, 80,000 cP to 700,000 cP, 90,000 cP to 650,000 cP, 100,000 cP to 600,000 cP, 110,000 cP to 550,000 cP, 120,000 cP to 500,000 cP, 130,000 cP to 450,000 cP, 140,000 cP to 400,000 cP, 150,000 cP to 350,000 cP or 160,000 cP to 300,000 cP.

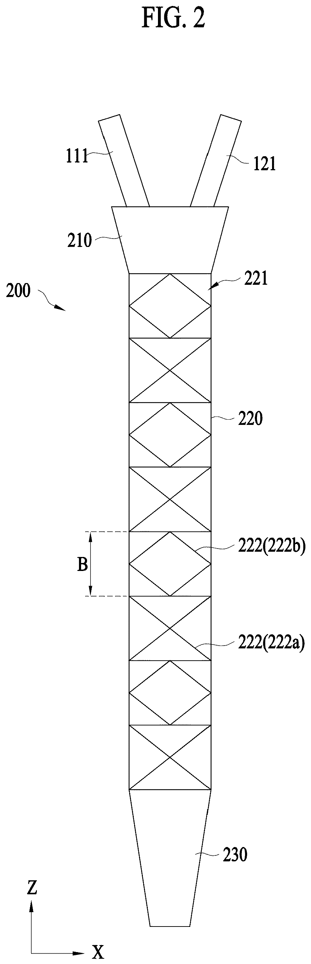

FIG. 2 is a plan view illustrating at least a portion of the mixer part 200 of the applicator of resin composition 10 according to an aspect.

The mixer part 200 may include a gathering part 210 in fluid connection with the first connection tube 111 and the second connection tube 121. Further, the mixer part 200 may include a mixing part 220 that is fluidly connected to the gathering part 210 and configured to mix the subject composition and the hardener composition that are supplied from the gathering part 210. Further, the mixer part 200 may form the resin composition 40 by passing through the subject composition and hardener composition of the mixing part 220, and may include an outlet part 230 fluidly connected to an application part 300 to supply the formed resin composition 40 to the application part 300 described below. The outlet part 230 may have a funnel shape so that the resin composition 40 may be discharged smoothly, and for example, the width in the X-axis direction may be reduced closer to the point where the resin composition 40 is discharged.

The mixing part 220 of the mixer part 200 may include a screw apparatus 221 for transporting, dividing and mixing the subject composition and the hardener composition. The screw apparatus 221 may be built in the mixing part 220, and may be positioned across the area in fluid connection with the gathering part 210. The mixer part 200 is not particularly limited in type as long as the subject composition and hardener composition, which are viscous compositions, pass through to form the resin composition 40. For example, the mixer part 200 may be a static mixer or a dynamic mixer. The static mixer is a mixer that allows mixing through the flow of the mixing target itself, and the dynamic mixer is a mixer that receives driving force and mixes the objects to be mixed. In other words, the screw apparatus 221 may take the form of a static mixer or a dynamic mixer.

It is desirable to form the resin composition 40 so that the mixer part 200 does not affect the quality such as the curing state or flowability. For this purpose, with regard to the mixer part 200, a static mixer that mixes at the flow rate of the fluid itself may be suitable. In other words, the screw apparatus 221 may have the form of a static mixer.

The screw apparatus 221 may include one or more elements 222, and may preferably include a plurality of elements 222. The number of elements 222 is not specifically limited, but may corresponds to the degree that the resin composition 40 is formed so as not to affect quality such as curing state or flowability and the compatibility is excellent and no reduction in process speed is caused. For example, the number may be 25 or less. One element 222 may form a single step B, and the number of steps B (the number of steps) may be determined depending on the number of elements 222.

The screw apparatus 221 may include a plurality of elements 222a and 222b of different shapes. For example, referring to FIG. 2, the screw apparatus 221 may include a first element 222a and a second element 222b having different shapes.

The screw apparatus 221 may include a structure in which the elements 222a and 222b of different shapes are repeatedly connected. For example, referring to FIG. 2, the screw apparatus 221 may has a repeated structure in which the first element 222a and the second element 222b are connected. Further, the screw apparatus 221 may have a structure in which the elements 222a and 222b of different shapes are repeatedly connected, but may have different connection angles. The resin composition 40 may be formed so that quality such as curing state or flowability is not affected and the screw apparatus 221 may be designed in order for the compatibility to be excellent in order not to cause a decrease in the process speed.

Meanwhile, the screw apparatus 221 may include three or more elements 222 having different shapes.

The applicator of resin composition 10 according to an aspect may include the application part 300. As described above, the mixer part 200 and the application part 300 may be connected. The resin composition 40 formed while passing through the mixer part 200 may be introduced into the application part 300.

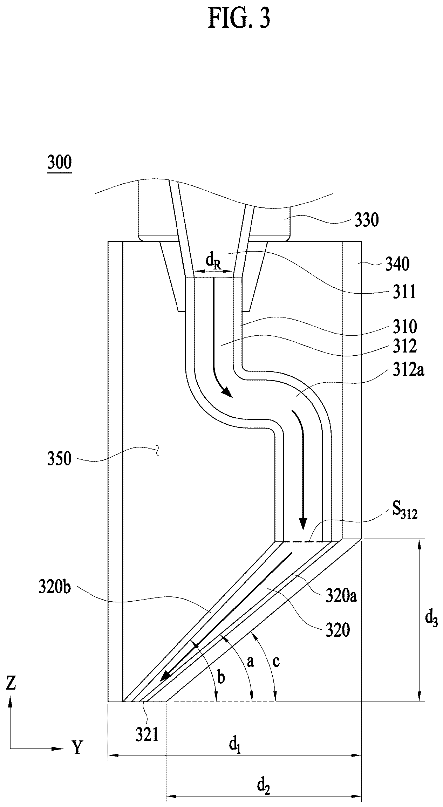

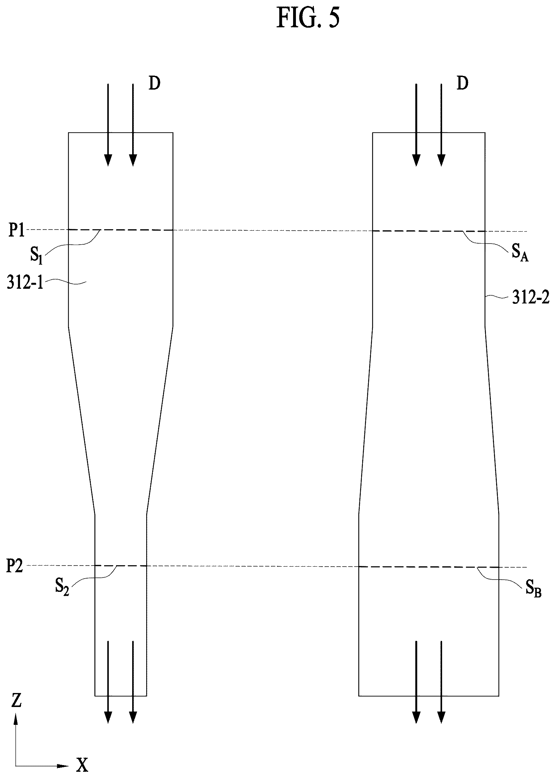

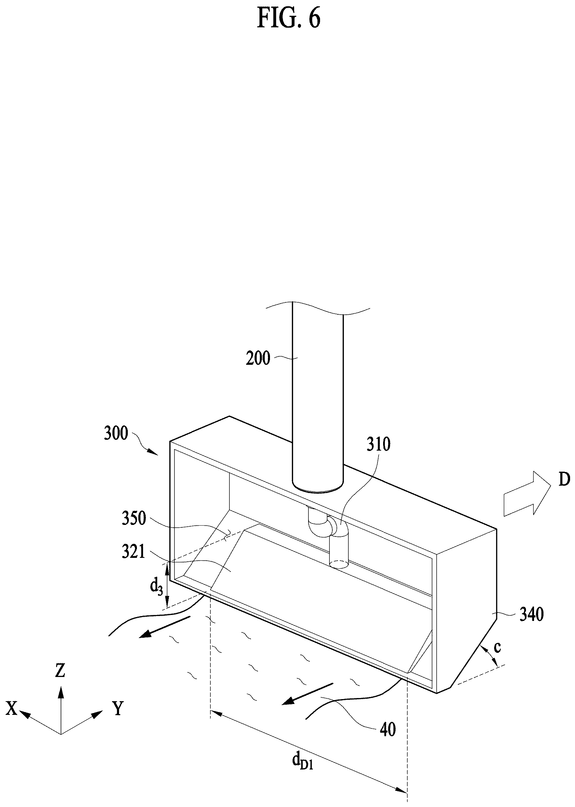

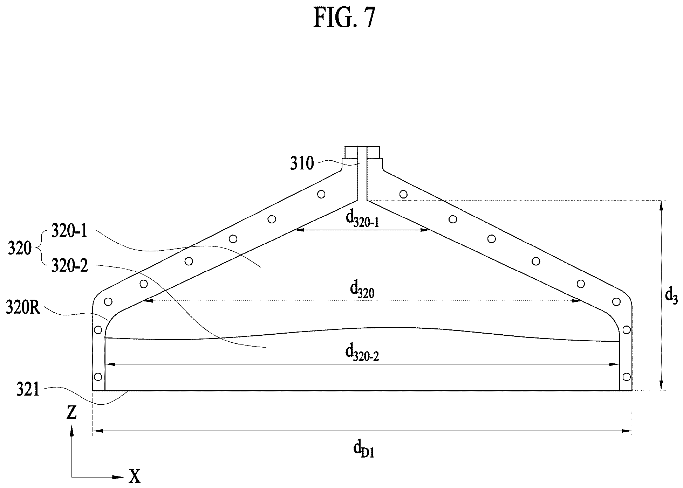

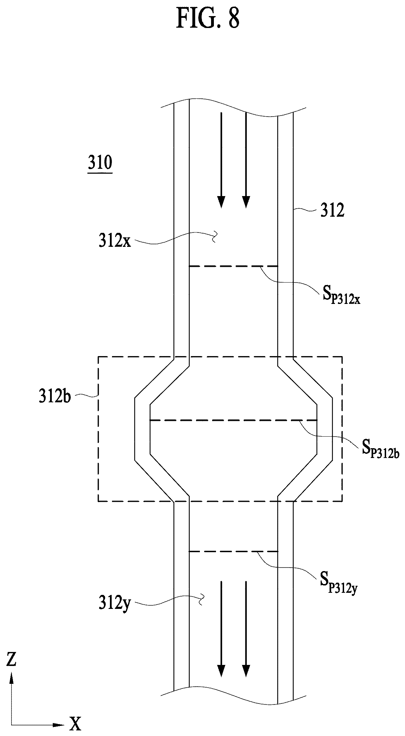

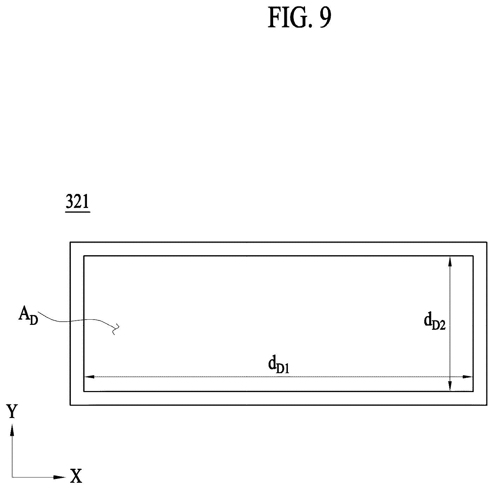

FIG. 3 is a plan view illustrating at least a portion of the application part 300 of the applicator of resin composition 10 according to an aspect. FIG. 4 is a perspective view illustrating at least a portion of the applicator of resin composition 10 according to an aspect. FIG. 5 is a plan view illustrating at least a portion of the application part 300 of the applicator of resin composition 10 according to an aspect. FIG. 6 is a perspective view illustrating at least a portion of the applicator of resin composition 10 according to an aspect. FIG. 7 is a plan view illustrating at least a portion of the application part 300 in FIG. 6. FIG. 8 is a plan view illustrating at least a portion of the application part 300 of the applicator of resin composition 10 according to an aspect. FIG. 9 is a plan view illustrating at least a portion of a discharge hole 321 of the applicator of resin composition 10 according to an aspect.

The application part 300 may include at least one application tube 310 through which the resin composition 40 introduced from the mixer part 200 passes. Meanwhile, when there are a plurality of mixer parts 200, a plurality of application tubes 310 may also be prepared corresponding to the number of mixer parts 200. Each of the mixer parts 200 may be fluidly connected to the application tube 310 in a one-to-one correspondence.

For example, referring to FIG. 4, the applicator of resin composition 10 may include a plurality of mixer parts 200, and a plurality of application tubes 310 may be prepared of which number to correspond to the number of the mixer parts 200. Referring to FIG. 6, the applicator of resin composition 10 may include one mixer part 200, and a single application tube 310 may be prepared corresponding to the number of the mixer part 200.

The application part 300 may include a connection part 330 fluidly connecting them at a location in contact with the mixer part 200.

The application tube 310 may include an inlet part 311 provided in the connection part 330. Specifically, the inlet part 311 may be part of the application tube 310. The inlet part 311 may be positioned to at least partially overlap the mixer part 200. The inlet part 311 may connect the mixer part 200 and a flowing part 312, which will be described later, to allow the resin composition 40 to flow. Here, the connection may be a fluid connection.

The inlet part 311 may have a shape with a gradually decreasing cross sectional area through which the resin composition 40 passes from the inlet to the outlet based on the direction in which the resin composition 40 flows. For example, the inlet part 311 may have a funnel shape. Through this shape, the inflow of the resin composition 40 formed in the mixer part 200 may be facilitated.

Specifically, the inlet part 311 may have a shape with a gradually decreasing cross sectional area through which the resin composition 40 passes from the end of the mixer part 200 to the end of the flowing part 312, which will be described later.

The application tube 310 may include the flowing part 312, which is an area other than the inlet part 311. With regard to the flowing part 312, based on the direction in which the resin composition 40 flows, the cross sectional area of each point through which the resin composition 40 passes may remain continuously constant. Through this, the resin composition 40 may flow at a constant moving speed and pressure, and thus it helps even application. Here, constant cross sectional area means that it is practically constant, and being practically constant may indicate that the difference is 10% or less. Further, in the present disclosure, the cross sectional area of the flowing part 312 may indicate the cross sectional area of each point through which the resin composition 40 passes based on the direction in which the resin composition 40 flows.

The flowing part 312 may have a pipe shape. Further, the flowing part 312 in the form of a pipe may have a diameter d_{R} of an appropriate size in order not to interfere with the flow of the resin composition 40 that is a viscous composition. The diameter d_{R} of the pipe-shaped flowing part 312 may be determined according to the viscosity of the resin composition 40 and the discharging speed, and there is no particular restriction on its value.

The flowing part 312 may include a bent part 312a prepared in at least an area to change the direction in which the introduced resin composition 40 moves. The bent part 312a may reduce moving speed by changing the direction in which the resin composition 40, which is a viscous composition, moves, and may help to accumulate some of the resin composition 40 due to the reduced speed and help to apply evenly through the accumulated resin composition 40. When there is no bent part 312a in the flowing part 312 (in other words, in the form of a line), due to the viscosity of the resin composition 40, there is a possibility that large or small amounts may suddenly transfer to a discharging part 320, and this may result in uneven application. The bent part 312a may prevent the resin composition 40 from moving into the discharging part 320 in irregular amounts due to its viscosity, and thus helps even application.

When there are many the bent parts 312a, the resin composition 40, which is a viscous composition, may have difficulty passing through the bent part 312a. Therefore, there may be a certain number of bent parts 312a. For example, there may be 5 or less bent parts 312a, 4 or less bent parts 312a, or 3 or less bent parts 312a. For example, as illustrated in FIG. 3, the bent part 312a may be corresponding to a two-folded shape.

Meanwhile, referring to FIG. 8, the flowing part 312 may include a storage part 312b provided in some areas to reduce the moving speed of the introduced resin composition 40. With regard to the storage part 312b, based on the direction in which the resin composition 40 flows, a cross sectional area (for example, S_{P312b}) of each point through which the resin composition 40 passes may be larger than the cross sectional area (for example, S_{P312x}, S_{p312y}) of each point through which the resin composition 40 passes in areas other than the storage part 312b.

The flowing part 312 may include the storage part 312b and passage parts 312x and 312y that are areas other than the storage part 312b. With regard to the storage part 312b, the cross sectional area (for example, S_{P312b}) of each point through which the resin composition 40 passes based on the direction in which the resin composition 40 flows may be larger than the cross sectional area (for example, S_{P312x} and S_{p312y}) of each point through which the resin composition 40 passes based on the direction in which the resin composition 40 of the passage parts 312x and 312y flows.

The shape of the storage part 312b is not particularly restricted, but may have a form in which the cross-sectional area of each point through which the resin composition 40 passes gradually increases and then decreases based on the direction in which the resin composition 40 flows. The shape may be advantageous in reducing the moving speed of the resin composition 40 and not interrupting the flow. When the storage part 312b has the shape described above, based on the direction in which the resin composition 40 flows, the maximum cross sectional area S_{P312b} may be established among the cross sectional areas of each point through which the resin composition 40 passes. The maximum cross sectional area S_{P312b} may be about 1.2 to 2 times, or about 1.3 to 1.6 times of the cross sectional area of each point through which the resin composition 40 passes (for example, S_{P312x} and S_{p312y}). When the maximum cross sectional area S_{P312b} of the storage part 312b is adjusted within the above-mentioned range, it prevents the resin composition 40 from moving in irregular amounts, which helps even application, and excessive accumulation of the resin composition 40 in the storage part 312b is prevented, and this ensures appropriate processability.

The location of the storage part 312b is not specifically restricted, but it may be advantageous to position the storage part 312b between a plurality of passage parts 312x and 312y to reduce the moving speed of the resin composition 40 and avoid interrupting the flow. Meanwhile, the plurality of passage parts 312x and 312y may include the first passage part 312x located at the rear of the storage part 312b based on the direction in which the resin composition 40 flows and the second passage part 312y located in front of the storage part 312b. The shape and the size of the first passage part 312x and the second passage part 312y may be different, but for smooth movement of the resin composition 40, it may be desirable to have the same shape and size. In other words, the cross sectional area S_{P312x} of the first passage part 312x and the cross sectional area S_{p312y} of the second passage part 312y may be the same.

Further, with regard to each of the first passage part 312x and the second passage part 312y, the cross sectional area may be constant in at least some areas. Specifically, with respect to the first passage part 312x, the cross sectional area of each point through which the resin composition 40 passes may be continuously constant with respect to the direction in which the resin composition 40 flows, at least in some areas. Further, with respect to the second passage part 312y, a cross sectional area of each point through which the resin composition 40 passes may be continuously constant with respect to the direction in which the resin composition 40 flows, at least in some areas.

The application part 300 may include the discharging part 320 that applies the resin composition 40. The discharging part 320 is provided inside the application part 300, and may include a storage space in which the resin composition 40 introduced from the application tube 310 may accumulate.

The discharging part 320 may reduce the moving speed of the resin composition 40 flowing from the application tube 310 by having a cross sectional area through which the resin composition 40 pass to be greater than the flowing part 312 of the application tube 310 through the storage space.

In the discharging part 320, the inflow speed of the resin composition 40 from the application tube 310 to the discharging part 320 is greater than the speed at which the resin composition 40 is discharged to the outside, and thus the discharging part 320 may be configured in order to reduce the moving speed of the resin composition 40 introduced from the application tube 310, and sore the resin composition 40 in the storage space.

The discharging part 320 including the storage space prevent the resin composition 40 flowing into the application tube 310 from being suddenly discharged to the outside in a large or small amount due to viscosity, and thus helps even application.

The discharging part 320 is in fluid connection with the application tube 310. Specifically, the discharging part 320 may be in direct fluid connection with the flowing part 312. In other words, the resin composition 40 may reach the discharging part 320 through the application tube 310, and may be applied by being discharged externally through the discharging part 320.

The discharging part 320 may be provided with the discharge hole 321 that allows the resin composition 40 to be discharged to the outside of the applicator of resin composition 10. The discharge hole 321 may have a rectangular shape so that the resin composition 40 may be surface-applied. With regard to the discharge hole 321, the width in the second direction, which is the moving direction of the applicator of resin composition 10, may be formed to be smaller than the width in the first direction, which is perpendicular to the second direction. When the discharging part 320 moves in the second direction and applies the resin composition 40 to the surface that is a target for application while the discharge hole 321 is in contact with the surface that is the target for application, the resin composition 40 may be applied simultaneously to an area as wide as the longitudinal direction of the rectangle.

For example, referring to FIG. 9, with regard to the discharge hole 321, the width d_{D1} of the first direction (X-axis direction) may be formed to be larger than the width d_{D2} of the second direction (Y-axis direction) perpendicular to the first direction.

Meanwhile, the amount of the resin composition 40 applied may be affected by a discharge area A_{D} of the discharge hole 321, and the discharge area A_{D} of the discharge hole 321 may be determined by the width d_{D1} in the first direction (X-axis direction) and the width d_{D2} in the second direction (Y-axis direction). For example, when the discharge hole 321 is rectangular, the discharge area A_{D} is the product of the width d_{D1} in the first direction (X-axis direction) and the width d_{D2} in the second direction (Y-axis direction).

The discharge area A_{D} of the discharge hole 321 may be designed to be similar to the cross sectional area of each point of the application tube 310 through which the resin composition 40 flowing from the mixer part 200 to the application part 300 passes. Specifically, referring to FIG. 3 and FIG. 9, the discharge area A_{D} of the discharge hole 321 may be designed to be similar to a cross sectional area S₃₁₂ of the end portion based on the direction in which the resin composition 40 flows in the flowing part 312 in direct contact with the discharging part 320. The design may help to apply the resin composition 40 without interruption. For example, the discharge area A_{D} of the discharge hole 321 may be 0.8 to 1.2 times or 0.9 to 1.1 times the cross sectional area S₃₁₂ of the end based on the direction in which the resin composition 40 flows in the flowing part 312 in direct contact with the discharging part 320.

In an aspect, there may be a plurality of application tubes 310. Referring to FIG. 4, the application tube 310 may include a first application tube 310-1 and a second application tube 310-2. Further, the first application tube 310-1 may include a first flowing part 312-1, and the second application tube 310-2 may include a second flowing part 312-2.

In an aspect, when there are a plurality of application tubes 310, each application tube 310 may be connected to one discharging part 320. However, the present disclosure is not limited thereto. The structure prevents the resin composition 40 from being discharged in irregular amounts when surface-applied, and thus even application is possible.

In an aspect, when there are a plurality of application tubes 310, the discharge area A_{D} of the discharge hole 321 may be designed to be similar to the sum of the cross sectional area S₃₁₂ of the end based on the direction in which the resin composition 40 flows in each flowing part 312 in direct contact with the discharging part 320. The discharge area A_{D} of the discharge hole 321 may be 0.8 to 1.2 times or 0.9 to 1.1 times the sum of the cross sectional area S₃₁₂ of the end portion based on the direction in which the resin composition 40 flows in each flowing part 312 in direct contact with the discharging part 320. Further, for example, the discharge area A_{D} of the discharge hole 321 may be similar to the sum of a cross sectional area S₃₁₂₋₁ of the end of the first flowing part 312-1 and a cross sectional area S₃₁₂₋₂ of the end of the second flowing part 312-2.

Meanwhile, in an aspect, with respect to each of the first flowing part 312-1 and the second flowing part 312-2, the cross sectional area may be constant in at least some areas. With regard to the first flowing part 312-1, the cross sectional area of each point through which the resin composition 40 passes may be continuously constant with respect to the direction in which the resin composition 40 flows, at least in some areas. Further, with respect to the second flowing part 312-2, as well, the cross sectional area of each point through which the resin composition 40 passes may be continuously constant with respect to the direction in which the resin composition 40 flows, at least in some areas. Here, the cross sectional area sizes of the first flowing part 312-1 and the second flowing part 312-2 may be the same or different.

In an aspect, the sum of the cross sectional area of the first flowing part 312-1 and the cross sectional area of the second flowing part 312-2 may be constant. FIG. 5 is a plan view illustrating at least a portion of the application part 300 of the applicator of resin composition 10 according to an aspect. Specifically, based on the direction D in which the resin composition 40 flows, the sum of cross sectional areas S₁ and S₂ of the first flowing part 312-1 and cross sectional areas S_{A} and S_{B} of the second flowing part 312-2 may remain constant. For example, among the ways in the direction D in which the resin composition 40 flows, the sum of the cross sectional area S₁ of the first flowing part 312-1 and the cross sectional area S_{A} of the second flowing part 312-2 at a first point P1 may be identical to the sum of the cross sectional area S₂ of the first flowing part 312-1 and the cross sectional area S_{B} of the second flowing part 312-2 at a second point P2. In other words, when there are a plurality of application tubes 310, based on the direction in which the resin composition 40 flows, the sum of the cross-sectional areas of each flowing part 312 may be continuously constant. The applicator of resin composition 10 may perform the surface-application with the resin composition 40 using the application part 300, and shorten the time required to apply the resin composition 40.

Meanwhile, the application part 300 may further include an opening and closing apparatus (not illustrated) that at least partially opens and closes the discharge hole 321. By closing all discharge holes 321 with the opening and closing apparatus, the resin composition 40 may be prevented from being discharged to the outside, and by opening the discharge hole 321 at least partially, the width to which the resin composition 40 is applied may be controlled. The opening and closing operation of the discharge hole 321 may be performed automatically or manually.

The ratio (d₃/d₁) of the height d₃ of the discharging part 320 and the width direction length d₁ of the application part 300 is not particularly limited as long as the resin composition 40 can be discharged smoothly without sudden large or small amounts being discharged, but for example, may be 0.1 or more and 5 or less, 0.2 or more to 4 or less, 0.3 or more to 3 or less, 0.4 or more and 2 or less, or 0.5 or more and 1 or less.

Referring to FIG. 3, the height d₃ of the discharging part 320 may refer to the length along the z-axis direction, and the width direction length d₁ of the application part 300 may refer to the length along the Y-axis direction. The discharging part 320 may include two surfaces 320a and 320b to form a storage space through which the resin composition 40 passes. The two surfaces 320a and 320b may be facing each other. Each of the two surfaces 320a and 320b may have a predetermined angle of inclination relative to the surface to which the resin composition 40 is applied. Here, the angle of inclination may be greater than 0 degrees or less than 90 degrees.

The discharging part 320 may include at least a first surface 320a and a second surface 320b forming a storage space. The first surface 320a and the second surface 320b may be the two surfaces 320a and 320b forming a storage space through which the aforementioned resin composition 40 passes.

Meanwhile, when the inclination angle of one of the two surfaces 320a and 320b is 90 degrees, the angle of inclination of the other one may be acute. Here, the acute angle is defined as being greater than 0 degrees or less than 90 degrees. For example, referring to FIG. 3, the two surfaces 320a and 320b facing each other to form a storage space may include the first surface 320a having a predetermined angle of inclination "a" relative to the surface to be applied, and the second surface 320b having a predetermined angle of inclination "b" relative to the surface to be applied. Here, when the inclination angle "b" of the second surface 320b is 90 degrees, the inclination angle "a" of the first surface 320a may be an acute angle.

In other words, the discharging part 320 may have an inclined structure. The inclined structure of the discharging part 320 prevents the resin composition 40 from being discharged in irregular amounts into the discharging part 320 due to its viscosity, and thus even application is possible.

The inclination angles of the two surfaces 320a and 320b facing each other to form a storage space of the discharging part 320 may have a predetermined difference. The difference in inclination angles between the two surfaces 320a and 320b may be 10 degrees or less, 9 degrees or less, 8 degrees or less, 7 degrees or less, 6 degrees or less, or 5 degrees or less. In this case, the gap between the two surfaces 320a and 320b may be configured to become larger or smaller as the surfaces approach the discharge end.

In an aspect, the difference in inclination angles between the two surfaces 320a and 320b may include 0 degree, and this may indicate that the inclination angles of the two surfaces 320a and 320b are the same. In this case, the inclination angles between the two surfaces 320a and 320b may be acute.

In an aspect, the ratio (b/a) of the inclination angle "b" of the second surface 320b and the inclination angle "a" of the second surface 320b between the two surfaces 320a and 320b facing each other to form a storage space may be 1 or more and 2, 1.01 to 1.9, 1.02 to 1.8, 1.03 to 1.7, 1.04 to 1.6, 1.05 to 1.5, 1.06 to 1.4, 1.07 to 1.3 or 1.08 to 1.2. When the ratio (b/a) satisfies this, it may be more advantageous to perform even surface application by continuously discharging the resin composition 40 accumulated in the storage space.

Meanwhile, the two surfaces 320a and 320b facing each other to form a storage space for the discharging part 320 may be configured to be gradually narrow toward the discharge end (in other words, toward the discharge hole 321) of the resin composition 40 to form a nozzle structure. The nozzle structure of the discharging part 320 may be configured so that the resin composition 40 is discharged without interruption through the discharge hole 321.

Specifically, a space may be formed between one end of the first surface 320a and one end of the second surface 320b. The space may be formed at the end of the nozzle structure described above. The resin composition 40 may be discharged to the outside through a space between one end of the first surface 320a and one end of the second surface 320b.

Between the two surfaces 320a and 320b facing each other to form a storage space for the discharging part 320, the first surface 320a may be relatively adjacent to the outer side of the applicator of resin composition 10 compared to the second surface 320b. Here, the inclination angle (in other words, "a") of the first surface 320a may be less than or equal to the inclination angle (in other words, "b") of the second surface 320b. This structure may be more advantageous in discharging the resin composition 40, which is a viscous composition, without interruption because the discharge end side has a nozzle structure, and may ultimately be advantageous in evenly applying the resin composition 40. However, unlike this, it is also possible for the inclination angle (in other words, "a") of the first surface 320a to be formed larger than the inclination angle (in other words, "b") of the second surface 320b.

The application part 300 may include a case 340 surrounding at least a portion of the application tube 310 and the discharging part 320. The case 340 may include an external part and a buffer part 350 provided on the inner side of the external part.

The external part of the case 340 may prevent the application tube 310 and the discharging part 320 from being damaged by external impact. The case 340 may provide the buffer part 350 at least partially between the application tube 310 and the external part and between the discharging part 320 and the external part. In various aspects, the buffer part 350 may consist of a void space or may be filled with an elastic material. The buffer part 350 may minimize shaking of the discharging part 320 when applying the resin composition 40, and at the same time protect the application tube 310 and the discharging part 320 from external impact. The elastic material filled in the buffer part 350 may include, for example, a urethane resin.

The case 340 may include a sloped portion. The inclined portion of the case 340 may have a predetermined inclination angle c with respect to the surface of the application target. Like the discharging part 320, the case 340 may an inclined portion having the predetermined inclination angle c with respect to the surface that is a target of application, and thus the case 340 may apply the resin composition 40 evenly while minimizing shaking. Here, the inclination angle c may be greater than 0 degree to 90 degrees or less, or greater than 0 degree and less than 90 degrees.

Further, the predetermined inclination angle c of the inclined portion of the case 340 may be designed based on the height d₃ of the discharging part 320 and the width direction length d₂ of the application part 300 that does not contact the surface that is the application target. Here, referring to FIG. 3, the height d₃ of the discharging part 320 may indicate the length along the z-axis direction, and the width direction length d₂ of the application part 300 that is not in contact with the surface that is the application target may indicate the length along the Y-axis direction. In other words, the predetermined inclination angle c of the inclined portion of the case 340 may be designed based on the inclination angles a and b of each of the two surfaces 320a and 320b facing each other to form a storage space for the discharging part 320.

The predetermined inclination angle c of the inclined portion of the case 340 may be smaller than or equal to the inclination angle (a, b) of at least one surface between the two surfaces 320a and 320b facing each other to form a storage space for the discharging part 320 to evenly apply the resin composition 40 while minimizing shaking. Specifically, for example, the predetermined inclination angle c of the inclined portion of the case 340 may be equal to the inclination angle (in other words, "a") of the first surface 320a between the two surfaces 320a and 320b forming the storage space of the discharging part 320. Further, the predetermined inclination angle c of the inclined portion of the case 340 may be smaller than the inclination angle of the second surface 320b (in other words, "b") between the two surfaces 320a and 320b forming the storage space of the discharging part 320. In another aspect, the predetermined inclination angle c of the case 340 may be smaller than the inclination angle (in other words, "a") of the first surface 320a.

Some areas of the case 340 may be in contact with the first surface 320a of the two surfaces facing each other to form a storage space for the discharging part 320. This may help to apply the resin composition 40 stably while minimizing shaking. Specifically, for example, the inclined portion of the case 340 may be in contact with the inclined first surface 320a, and the inclination angle c of the inclined portion of the case 340 may be the same as the inclination angle (in other words, "a") of the first surface 320a.

The width d_{D1} of the first direction (X-axis direction) of the discharge hole 321 may be greater than the height d₃ of the discharging part 320. In order to apply the resin composition 40 stably and broadly, the ratio d_{D1}/d₃ of the width d_{D1} of the first direction (X-axis direction) of the discharge hole 321 and the height d₃ of the discharging part 320 may be 1.5 or higher and 5 or lower, 1.6 or higher and 4.5 or lower, 1.7 or higher and 4.2 or lower, 1.8 or higher and 4 or lower, 1.9 or higher and 3.5 or lower, 2 or higher and 3.3 or lower, 2.1 or higher and 3 or lower, 2.3 or higher and 2.95 or lower, or 2.4 or higher and 2.9 or lower.

The discharging part 320 may include an area whose width d₃₂₀ in the first direction (X-axis direction) gradually increases as it moves away from the application tube 310. The maximum width d₃₂₀ of the first direction (X-axis direction) of the discharging part 320 may be identical to the width d_{D1} of the first direction (X-axis direction) of the discharge hole 321.

The discharging part 320 may be divided into a plurality of areas to aid in the even application of the resin composition 40, which is a viscous composition. For example, the plurality of areas may be distinguished according to the change rate (increase rate or decrease rate) of the width d₃₂₀ in the first direction (X-axis direction) of the discharging part 320. The change rate of the width d₃₂₀ in the first direction (X-axis direction) may be an instantaneous change rate. In the discharging part 320, the change rate of the same width d₃₂₀ may be achieved within the same area. Here, being the same indicates being practically identical, and may indicate that based on the change rate of the width d₃₂₀ at the first point, the ratio of the difference between the change rate of the width d₃₂₀ at the first point and the change rate of the width d₃₂₀ at the second point, which is different from the first point is within 5%.

Referring to FIG. 7, the discharging part 320 may include a first discharge area 320-1 and a second discharge area 320-2. The first discharge area 320-1 may be positioned closer to the application tube 310 than the second discharge area 320-2. The width d₃₂₀₋₁ of the first direction (X-axis direction) of the first discharge area 320-1 may be shorter than the width d₃₂₀₋₂ of the first direction (X-axis direction) of the second discharge area 320-2. The change rate of the width d₃₂₀₋₁ of the first direction (X-axis direction) of the first discharge area 320-1 may be greater than the change rate of the width d₃₂₀₋₂ of the first direction (X-axis direction) of the second discharge area 320-2.

The maximum width d₃₂₀₋₁ of the first direction (X-axis direction) of the first discharge area 320-1 may be equal to the minimum width d₃₂₀₋₂ of the first direction (X-axis direction) of the second discharge area 320-2, or may be smaller than the minimum width d₃₂₀₋₂ of the first direction (X-axis direction) of the second discharge area 320-2. The maximum width d₃₂₀₋₂ of the second discharge area 320-2 in the first direction (X-axis direction) may be equal to the width d_{D1} of the discharge hole 321 in the first direction (X-axis direction).

The discharging part 320 may include a boundary 320R formed between the first discharge area 320-1 and the second discharge area 320-2. The boundary 320R is not particularly limited, but may have surfaces with curvature greater than 0, for example.

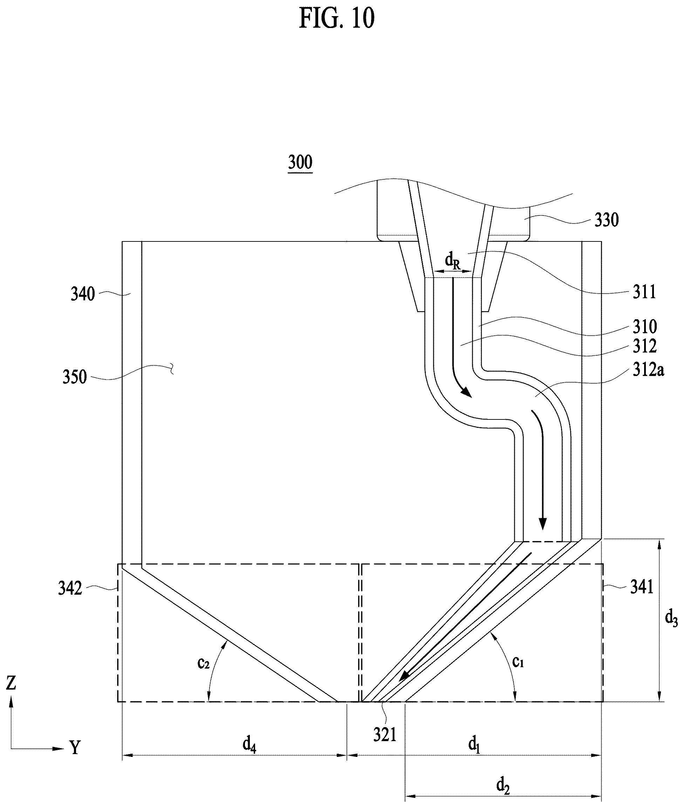

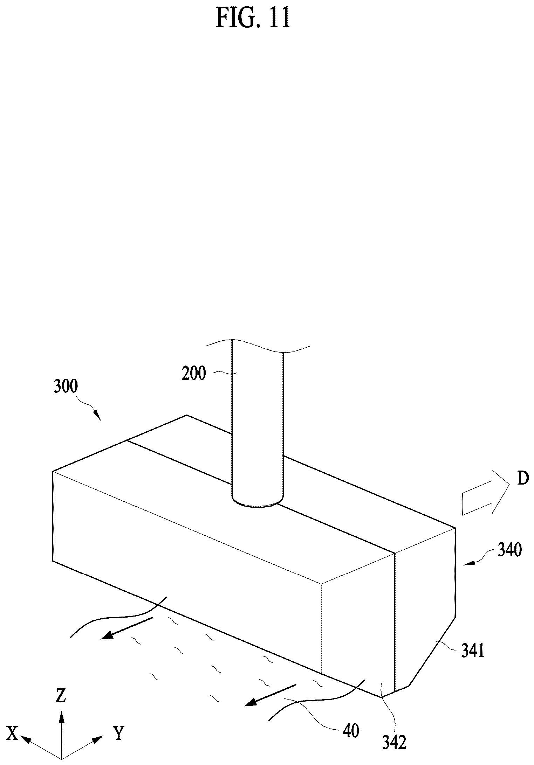

FIG. 10 is a plan view illustrating at least a portion of the application part 300 of the applicator of resin composition 10 according to an aspect. FIG. 11 is a perspective view illustrating at least a portion of the applicator of resin composition 10 according to an aspect.

The case 340 may include a plurality of inclined portions. For example, the inclined portions of the case 340 may include a first area 341 and a second area 342. The first area 341 may have a predetermined inclination angle c₁ relative to the surface that is the application target, and the second area 342 may have a predetermined inclination angle c₂ relative to the surface that is the target of application. Here, the inclination angle c₁ and inclination angle c₂ may be greater than 0 degrees and less than 90 degrees.

The predetermined inclination angle c₁ of the first area 341 may be designed based on the height d₃ of the discharging part 320 and the width direction length d₂ of the first area 341 that does not contact the surface that is application target. Referring to FIG. 10, the height d₃ of the discharging part 320 may indicate the length along the Z-axis direction, and the width direction length d₂ of the first area 341 that does not contact the surface that is the application target may indicate the length along the Y-axis direction. The predetermined inclination angle c₁ of the first area 341 may be designed based on the respective inclination angles a and b of the two surfaces 320a and 320b facing each other to form a storage space for the discharging part 320.

The predetermined inclination angle c₂ of the second area 342 may be designed based on the height d₃ of the discharging part 320 and the width direction length d₄ of the second area 342 that does not contact the surface that is the application target. The width direction length d₄ of the second area 342 that does not contact the surface that is the application target may mean the length along the Y-axis direction. The predetermined inclination angle c₂ of the second area 342 may be designed based on the predetermined inclination angle c₁ of the first area 341.

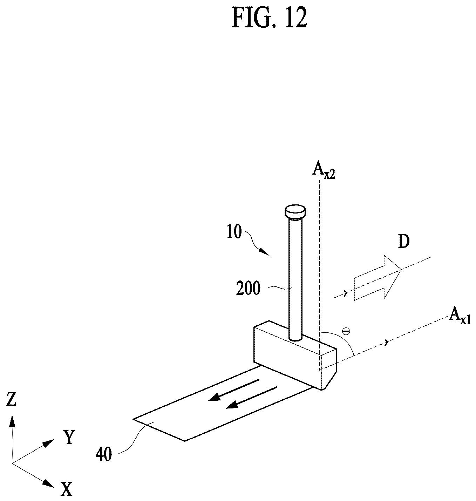

By the case 340 including the plurality of inclined areas, the case 340 may apply the resin composition 40 more evenly with minimal shaking. Meanwhile, the predetermined inclination angle c₂ of the second area 342 may be equal to or less than the predetermined inclination angle c₁ of the first area 341. Through this, structural stability is secured, and the shaking of the applicator of resin composition 10 may be minimized, and may it may help to apply the resin composition 40 evenly. FIG. 12 is a perspective view illustrating the process of applying the resin composition 40 using the applicator of resin composition 10 according to aspect.

The applicator of resin composition 10 may move at a predetermined angle of inclination relative to the surface that is the application target. The inclination angle of the applicator of resin composition 10 may be determined by the angle (Θ) between the axis A_{X1} parallel to the direction of movement and the axis A_{X2} perpendicular to the resin composition 40 to be applied. The inclination angle (Θ) of the applicator of resin composition 10 is not particularly limited as long as the resin composition 40 is smoothly applied to the surface to which the resin composition 40 is to be applied, but it may be more advantageous to keep it closer to vertical, around 80 to 90 degrees, 85 to 90 degrees, or 88 to 90 degrees.

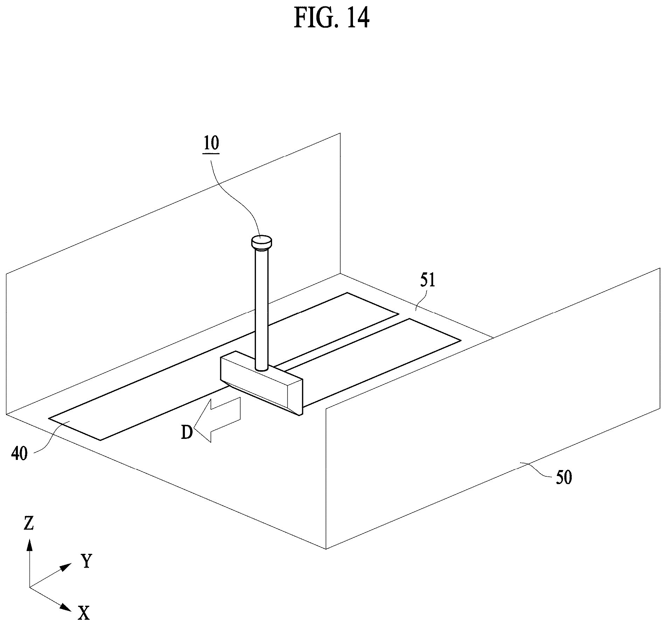

FIG. 13 and FIG. 14 are perspective views illustrating the process of applying the resin composition 40 to the housing 50 using the applicator of resin composition 10 according to an aspect.

The resin composition 40 that passed through the application tube 310 is collected in the storage space provided in the discharging part 320, and when a sufficient amount is collected, the resin composition 40 may be surface-applied through the discharge hole 321. As the applicator of resin composition 10 moves in the D direction, which is the application direction, the resin composition 40 may be surface-applied from the -D direction to the +D direction.

As described above, the applicator of resin composition 10 may apply the resin composition 40 to at least one surface of the housing 50 that accommodates a battery. The housing 50 may be a structure for protecting battery cells (battery cells) in a battery module or battery pack from damage from external impact. The shape of the housing 50 is not particularly restricted, but, for example, the housing 50 may be U-shaped, including a lower surface and two side surfaces connected both sides of the lower surface, as illustrated in FIG. 13 and FIG. 14. Further, the housing 50 may have a settlement surface 51 on which battery cells may be mounted, and the surface on which the aforementioned resin composition 40 is to be applied may be the settlement surface 51. Meanwhile, the housing 50 may be a structure that constitutes the exterior of a battery module or a battery pack, and may be used in a cell to pack that one or more battery cells are mounted on the settlement surface 51.

The applicator of resin composition 10 may perform the surface-application with the resin composition 40 to the settlement surface 51 of the housing 50 while moving in the D direction. Further, the applicator of resin composition 10 may repeatedly perform the surface-application with the resin composition 40 to a target location on the settlement surface 51.

By placing a battery cell on the settlement surface 51 to which the resin composition 40 is applied and hardening the resin composition, the battery cell may be fixed to the housing 50. In this way, a battery module or battery pack may be manufactured, and specifically, a cell to pack may be manufactured.

Meanwhile, the applicator of resin composition 10 may apply the resin composition 40 to at least one surface of a battery. In other words, the applicator of resin composition 10 may apply the resin composition 40 to at least a part of at least one surface of the housing 50 that accommodates the battery or at least one surface of the battery.

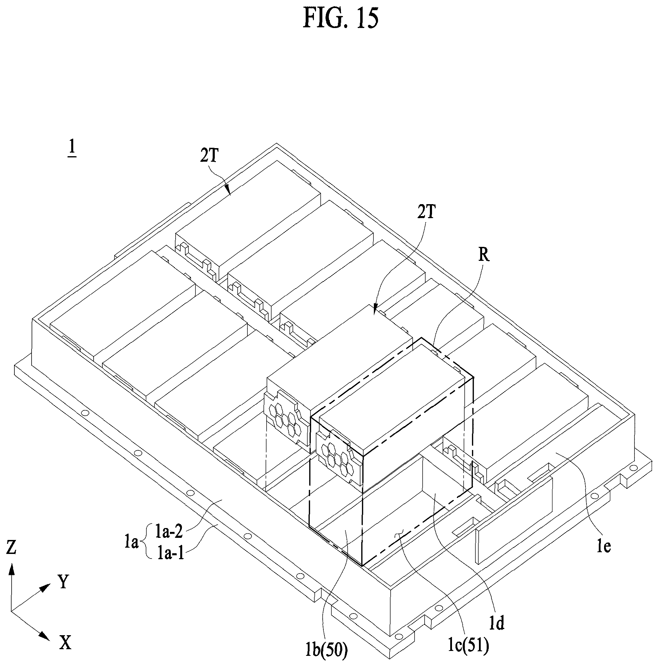

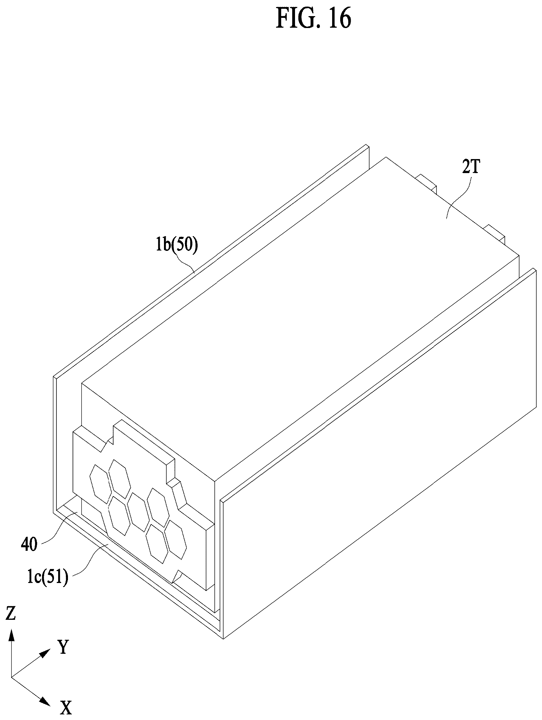

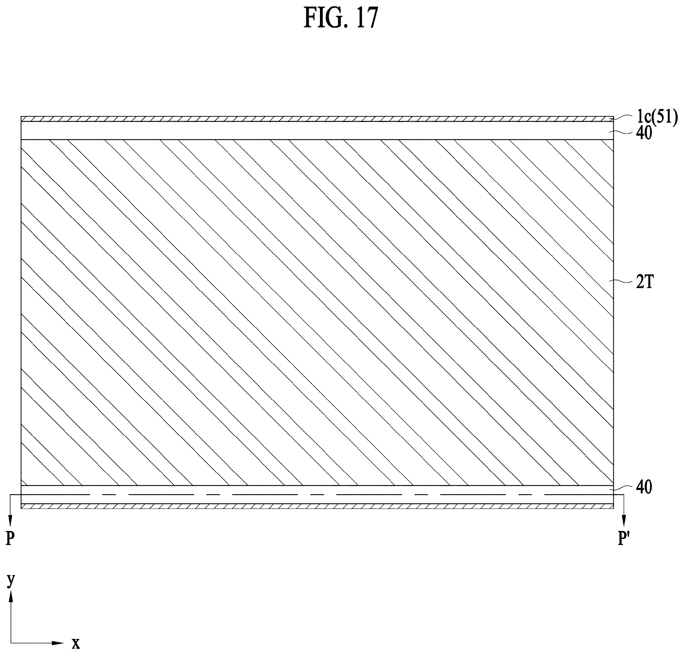

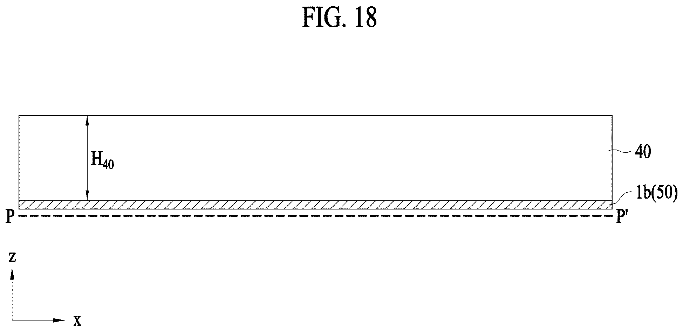

FIG. 15 is a schematic exploded perspective view briefly illustrating a battery pack 1 according to an aspect. FIG. 16 is a schematic enlarged view illustrating a portion of the battery pack (for example, a part R). FIG. 17 is a top view of FIG. 16. FIG. 18 is a cross-sectional view along line P-P' of FIG. 17.

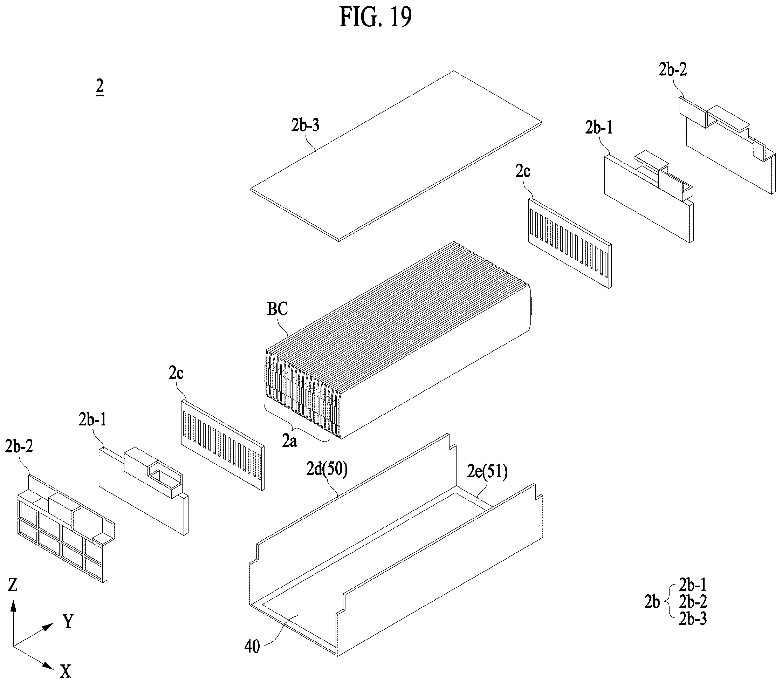

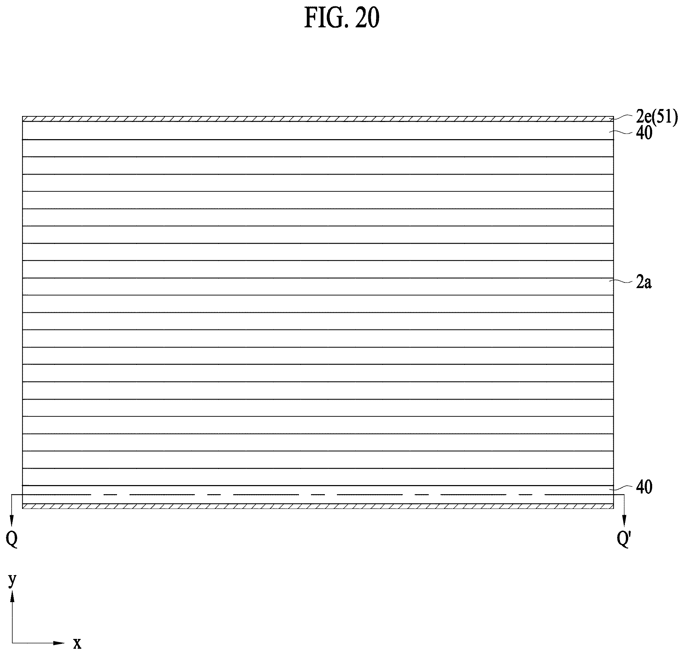

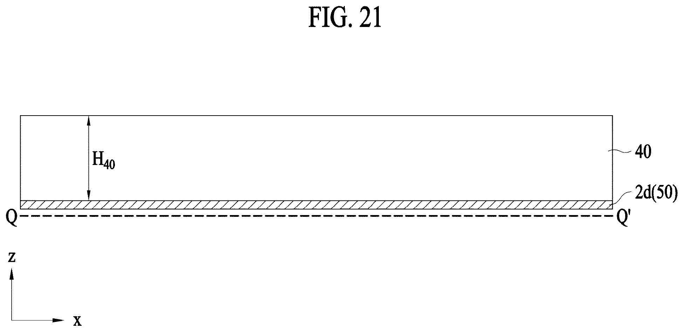

FIG. 19 is an exploded perspective view schematically illustrating a battery module 2 according to an aspect of the present application. FIG. 20 is a top view of FIG. 19. FIG. 21 is a cross-sectional view along line Q-Q' of FIG. 20.

The battery assembly (1, 2) according to various embodiments of the present application may be a term encompassing at least a part of the battery pack 1 or at least a part of the battery module 2. For example, in the specification, the battery assembly 1 and 2 may be the battery pack 1 or the battery module 2, or may also refer to a battery cell structure in which at least a portion of the housing of the battery pack 1 or the battery module 2 is omitted.

Referring to FIG. 15 and FIG. 19, the battery assembly 1 and 2 according to various embodiments may include a housing (1b, 2d) having a settlement surface (1c, 2e) and a stacked battery (2T, 2a) disposed on the settlement surface (1c, 2e).

For example, the housings 1b and 2d in FIG. 15 and FIG. 19 may correspond to the housing 50 in FIG. 14, and the settlement surfaces 1c and 2e in FIG. 15 and FIG. 19 may correspond to the settlement surface 51 in FIG. 14.

Stacked batteries 2T and 2a may include a plurality of battery cells BC (see FIG. 19). The plurality of battery cells BC may be stacked. For example, the plurality of battery cells BC may be stacked in one direction (for example, the first direction (X direction)).

Referring to FIG. 15, the stacked battery 2T may a battery module in which a plurality of battery cells are accommodated, and at least some are surrounded by a cover. Even though not illustrated in the drawing, the stacked battery 2T may include a plurality of battery cells, and in this case, the battery pack 1 may be a cell to pack. Referring to FIG. 19, the stacked battery 2a may be a stacked structure in which the plurality of battery cells BC are stacked.

The battery assembly 1 and 2 may include the resin composition 40 disposed on the settlement surfaces 1c and 2e. Some of the resin composition 40 may be sandwiched between the housing (1b, 2d) and the stacked battery (2T, 2a). Some other resin composition 40 may be placed between the settlement surface (1c, 2e) and the stacked battery (2T, 2a). The resin composition 40 may be interposed between the settlement surface (1c, 2e) and the stacked battery (2T, 2a) to join the housing (1b, 2d) and the stacked battery (2T, 2a). Here, for example, the resin composition 40 may be the resin composition 40 that is hardened after being applied in liquid state.

The resin composition 40 placed between the housing (1b, 2d) and the stacked battery (2T, 2a) has a difference ratio between the maximum thickness and the average thickness H₄₀ within 5%, and for example, the difference ratio of the difference between the minimum thickness and the average thickness H₄₀ with respect to the average thickness H₄₀ may be within 5%. In other words, the resin composition 40 placed between the housing (1b, 2d) and the stacked battery (2T, 2a) may substantially minimize the thickness difference. This may be implemented through the applicator of resin composition 10 that performs the surface-application with the resin composition 40. When the resin composition 40 is applied through a line-application, the resin composition 40 placed between the housing (1b, 2d) and the stacked battery (2T, 2a) may have a difference in thickness. The average thickness H₄₀ of the resin composition 40 is not particularly limited, but may indicate the value that is obtained by dividing the cross-sectional area of the resin composition 40 placed between the housing (1b, 2d) and the stacked battery (2T, 2a) in the volume of the resin composition 40 placed between the housing (1b, 2d) and the stacked battery (2T, 2a) by the contact area with the settlement surface (1c, 2e). Here, for example, the resin composition 40 may be the resin composition 40 that is applied in a liquid state and then cured.

In an aspect, the resin composition 40 interposed between the housing (1b, 2d) and the stacked battery (2T, 2a) may have a substantially uniform thickness. For example, the resin composition 40 placed between the housing (1b, 2d) and the stacked battery (2T, 2a) may have a substantially even thickness at least within the area range that is applied at one time by means of a surface-application manner. For example, with respect to the battery assemblies 1 and 2 manufactured in accordance with an aspect of the present application, since the resin composition 40 may be applied in the surface-application manner at least within the area range corresponding to the length of the major side of the discharge hole (for example, the first direction width d_{D1} of FIG. 9), and thus the resin composition 40 may have the substantially even thickness. Meanwhile, in an aspect, the longitudinal length of the discharge hole (for example, the first direction width d_{D1} of FIG. 9) may be 100 mm, or greater.

The battery assembly 1 and 2 according to an aspect of the present application may be the battery pack 1. The battery pack 1 may contain the stacked battery 2T. The battery pack 1 may include various control devices such as a battery management system (BMS) and a cooling device.

Again, referring to FIG. 15, the battery pack 1 may include a pack outer wall 1a surrounding the stacked battery 2T. The pack outer wall 1a may include a base part 1a-1 that supports the lower surface of the stacked battery 2T and a side wall part 1a-2 surrounding the side of the stacked battery 2T. The battery pack 1 may include a cross member 1d crossing the base part 1a-1 in one direction (for example, the first direction (x direction)) to ensure structural rigidity. The battery pack 1 may include the housing 1b forming the settlement surface 1c on which the stacked batteries 2T are mounted by connecting the cross member 1d and the side wall part 1a-2. The battery pack 1 may include an electronic component part 1e including a BMS and various control devices. However, the structure of the battery pack 1 is not limited thereto.

Referring to FIG. 19, the battery module 2 may include the housing 2d including the settlement surface 2e on which the stacked battery 2a is mounted. The stacked battery 2a may include the plurality of battery cells BC as described above. The battery module 2 may include a busbar 2c electrically connected to the stacked battery 2a. The stacked battery 2a may contain a cathode tab and an anode tab. In an aspect, the cathode tab and anode tab may be extended in opposite directions, but may be extended to face the same direction, and there is no limit thereon. There may be a plurality of busbars 2c, and some may be connected to the cathode tab and others may be connected to the anode tab. The busbar 2c may have slits of the number of cathode tabs or more, or slits of the number of anode tabs or more. By bending a portion of the cathode tab and anode tab that passed through the slit and bringing them into contact with the busbar 2c, the electrical connection between the busbar 2c and the stacked battery 2a may be implemented.

The battery module 2 may include a cover 2b to protect the stacked battery 2a. The cover 2b may include an inner side cover 2b-1 that covers one side of the busbar 2c to protect the busbar 2c and an outer side cover 2b-2 that covers one side of the inner side cover 2b-2 to protect the inner side cover 2b-1. The cover 2b may include the inner side cover 2b-1, the outer side cover 2b-2, and an upper cover 2b-3 covering the area uncovered by the housing 2d. The stacked battery 2a may be surrounded by the cover 2b and the housing 2d.

The applicator of resin composition 10 and the battery assembly 1 and 2 according to an aspect of the present application may be widely applied in green technology fields such as electric vehicles, battery charging stations, and other battery-based solar and wind power generation. Further, the applicator of resin composition 10 and the battery assembly 1 and 2 according to an aspect of the present application may be applied to eco-friendly electric vehicles or hybrid vehicles to prevent climate change by suppressing air pollution and greenhouse gas emissions.

In the above, various embodiments of the present disclosure are described in detail. However, it will be apparent to those with average knowledge in the technical field that scope of rights of this disclosure is not limited thereto, and various modifications and variations are possible without departing from the technical spirit of the present disclosure as set forth in the claims. Further, the above-described aspect may be implemented with some elements deleted, and each aspect may be implemented in combination with each other.

### [Description of Symbols]

- 10: Applicator of resin composition
- 40: Resin composition
- 50: Housing
- 100: Cartridge part
- 200: Mixer part
- 300: Application part

## Claims

1. An applicator for resin composition configured to apply resin composition to at least a portion of at least one surface of a housing accommodating a battery or at least one surface of the battery, the applicator of resin composition comprising:
a cartridge part;
a mixer part connected to the cartridge part; and
an application part connected to the mixer part,
wherein the application part includes:
at least one application tube configured for resin composition flowing from the mixer part to pass through; and
a discharging part including a storage space configured for resin composition flowing from the at least one application tube to be accumulated,
wherein the discharging part includes at least a first surface and a second surface forming the storage space, and
is configured to discharge the resin composition outside through a space between an end of the first surface and an end of the second surface.

2. The applicator of resin composition of claim 1,
wherein each of the first surface and the second surface independently are configured to have an inclination angle of more than 0 degree and less than or equal to 90 degrees with respect to a surface on which the resin composition is intended to be applied.

3. The applicator of resin composition of claim 1,
wherein, when any one of the first surface and the second surface has an inclination angle of 90 degrees with respect to the surface on which the resin composition is to be applied, the other surface of the first surface and the second surface has an inclination angle greater than 0 degree and less than 90 degrees.

4. The applicator of resin composition of claim 1,
wherein the cartridge part includes a first cartridge part configured to accommodate a subject composition and a second cartridge part configured to accommodate a hardener composition, the first cartridge part is fluidly connected to the mixer part via a first connection tube, and the second cartridge part is fluidly connected to the mixer part via a second connection tube, and
wherein the mixer part includes a gathering part fluidly connected to the first connection tube and the second connection tube and a mixer fluidly connected to the gathering part and having a screw.

5. The applicator of resin composition of claim 1,
wherein the at least one application tube includes an inlet part and a flowing part, wherein
the inlet part is disposed to at least partially overlap the mixer part, and configured to connect the mixer part and the flowing part in order for the resin composition to flow, and
the inlet part has a shape in which a cross sectional area through which the resin composition is configured to pass gradually decreases from an end of the mixer part to an end of the flowing part.

6. The applicator of resin composition of claim 5,
wherein the flowing part comprises a cross sectional area of each point that remains constant and through which the resin composition passes based on a direction in which the resin composition flows.

7. The applicator of resin composition of claim 5,
wherein the flowing part comprises a bent part that is provided in at least an area and
configured to change a direction in which the resin composition moves.

8. The applicator of resin composition of claim 7,
wherein the bent part has five bends or less.

9. The applicator of resin composition of claim 6,
wherein the flowing part further comprises a storage part provided in at least an area and
configured to decrease a moving speed of the resin composition, and
wherein the storage part comprises a cross sectional area of each point through which the resin composition passes based on the direction in which the resin composition flows that is greater than a cross sectional area of each point through the resin composition passes in an area other than the storage part.

10. The applicator of resin composition of claim 2,
wherein the first surface and the second surface have an inclination angle difference that is 10 degrees or less.

11. The applicator of resin composition of claim 1,
wherein the first surface and the second surface are configured to be gradually narrower toward a discharge end of the resin composition to form a nozzle structure.

12. The applicator of resin composition of claim 1,
wherein the discharging part comprises a discharge hole configured in order for the resin composition to be discharged outsidecomposition,
wherein the discharge hole has a rectangular shape to perform a surface-application with the resin composition.

13. The applicator of resin composition of claim 12,
wherein the discharge hole is formed in order for a width in a second direction that is a direction in which the applicator of the composition moves to be smaller than a width in a first direction perpendicular to the second direction.

14. The applicator of resin composition of claim 1,
wherein the resin composition is a viscous composition having a viscosity of 10,000 cP or greater measured at 25°C.

15. The applicator of resin composition of claim 1,
wherein the application part includes a case configured to cover the application tube and
at least a portion of the discharging part, wherein the case includes:
an external part; and
a buffer part provided inside the external part.

16. The applicator of resin composition of claim 2,
wherein the first surface has an inclination angle smaller than or equal to an inclination angle of the second surface.

17. An applicator of resin composition configured to apply a resin composition that is applied to at least a portion of at least one surface of a housing accommodating a battery or at least one surface of the battery, the applicator of resin composition comprising:
a cartridge part;
a mixer part connected to the cartridge part; and
an application part connected to the mixer part,
wherein the application part includes:
at least one application tube configured for resin composition flowing from the mixer part to pass through;
a discharging part including a storage space configured for resin composition flowing from the at least one application tube to be accumulated; and
a case configured to cover the application tube and at least a portion of the discharging part,
wherein the case includes an inclined part, and the inclined part has a predetermined inclination angle with respect to a surface that is an application target.

18. The applicator of resin composition of claim 17,
wherein the discharging part includes a first surface and a second surface facing each other to form the storage space, each having a predetermined inclination angle with respect to an intended surface on which the resin composition is to be applied,
wherein the first surface has an inclination angle that is smaller than or equal to an inclination angle of the second surface, and
wherein the predetermined inclination angle is smaller than the inclination angle of the second surface.

19. The applicator of resin composition of claim 17,
wherein the case comprises a plurality of inclined parts.

20. A battery assembly comprising:
a housing with a settlement surface;
a stacked battery disposed on the settlement surface; and
a resin composition interposed between the settlement surface and the stacked battery and for joining the housing and the stacked battery,
wherein a ratio of difference between a maximum thickness of the resin composition relative to an average thickness of the cured resin composition between the housing and the stacked battery and the average thickness is within 5%, and
wherein a ratio of difference between a minimum thickness for the average thickness of the resin composition and the average thickness is within 5%.
